# EUROPÄISCHE PATENTSCHRIFT

(11) **EP 4 134 139 B1**
(45) Veröffentlichungstag und Bekanntmachung des Hinweises auf die Patenterteilung: **16.10.2024**
(21) Anmeldenummer: 21190682.1
(22) Anmeldetag: 10.08.2021
(51) Int. Cl.: A62C 99/00, A62C 8/06

(54) **BRANDSCHUTZÜBUNGSVORRICHTUNG ZUR REALISTISCHEN SIMULATION VON BRANDSZENARIEN VON ELEKTRISCHEN AKKUMULATOREN**
FIRE SAFETY TRAINING DEVICE FOR REALISTIC SIMULATION OF FIRE SCENARIOS OF ELECTRICAL ACCUMULATORS
DISPOSITIF D'EXERCICE D'INCENDIE DESTINÉ À LA SIMULATION RÉALISTE DE SCÉNARIOS D'INCENDIE D'ACCUMULATEURS ÉLECTRIQUES

(43) Veröffentlichungstag der Anmeldung: 15.02.2023
(73) Patentinhaber: AISCO Firetrainer GmbH, 79232 March (DE)
(72) Erfinder: Streubel, Gunter, 79098 Freiburg (DE)
(74) Vertreter: Mertzlufft-Paufler, Cornelius

(56) Entgegenhaltungen:
- EP-A1- 3 733 246
- EP-A1- 3 753 608
- DE-U1- 20 018 073
- US-A- 5 226 818
- US-A1- 2006 207 773

## Beschreibung

Die Erfindung betrifft eine Brandschutzübungsvorrichtung zum Erzeugen wenigstens eines realistischen Brandszenarios zu Übungszwecken, mit einer Brennervorrichtung, die als Wärmequelle dient.

Derartige Brandschutzübungsvorrichtungen werden bereits eingesetzt, um das Löschen von Bränden zu trainieren. Hierzu weisen solche Vorrichtungen typischerweise eine Brennervorrichtung, entweder als Trockenbrenner oder beispielsweise als Flüssigbrenner ausgestaltet, auf, um Übungsfeuer mit offenere Flamme unterschiedlicher Brandklassen zu erzeugen. Der Übende kann so den richtigen Umgang mit verschiedenen Löschmitteln und Löschhilfsmittel üben, indem er das von der Brandschutzübungsvorrichtung bereitgestellte Übungsfeuer mit diesen Mitteln kontrolliert löscht.

EP 3 753 608 A1 beschreibt beispielsweise eine Brandsimulationsvorrichtung zur Simulation von Bränden verschiedener Brandklassen.

Aus DE 200 18 073 U1 ist ein Flashover-Container bekannt, der für die Ausbildung von Feuerwehreinsatzkräften gedacht ist, mit einem verschließbaren Brandraum, in welchem zu löschende Übungsfeuer mit entstehendem Rauch entfacht werden können.

US 5,226,818 beschreibt ebenfalls ein Trainingssystem für Feuerwehreinsatzkräfte mit einer Brennervorrichtung, die mit Treibstoff betrieben wird, um realistisch Brände in Innenräumen zu simulieren und damit eine realitätsnahe Brandlöschübung zu ermöglichen.

Für den Übungserfolg ist es wichtig, ein möglichst realitätsnahes Brandszenario zu erzeugen, das realistische Flammenformen, aber auch Aspekte wie Rauchentwicklung, eingeschränkte Sicht, Hitzeentwicklung etc. realisiert. Gleichzeitig muss unter allen Umständen die Sicherheit der Übenden gewährleistet bleiben, damit diese gefahrlos mit der Brandschutzübungsvorrichtung üben können.

Die Erfindung hat es sich hiervon ausgehend zur Aufgabe gemacht, eine neuartige Brandschutzübungsvorrichtung bereitzustellen, die die Trainingsmöglichkeiten verbessert.

Zur Lösung sind erfindungsgemäß bei einer Brandschutzübungsvorrichtung die Merkmale von Anspruch 1 vorgesehen. Insbesondere wird somit erfindungsgemäß zur Lösung der Aufgabe bei einer Brandschutzübungsvorrichtung der eingangs genannten Art vorgeschlagen, dass die Brandschutzübungsvorrichtung mehrere Wärmeabstrahlflächen aufweist, die mittels der als Heiz-Brennervorrichtung ausgestalteten Brennervorrichtung, vorzugsweise direkt, beheizbar sind. Dadurch wird erreicht, dass über die Wärmeabstrahlflächen einen Schwelbrand innerhalb eines elektrischen Akkumulators simuliert werden kann.

Hierdurch ist es insbesondere möglich, den Einsatz von Wärmebildkameras als Löschhilfsmittel mit der Brandschutzübungsvorrichtung zu trainieren, da die Wärmeentwicklung der Wärmeabstrahlflächen - ähnlich wie bei der starken Hitzeentwicklung innerhalb eines elektrischen Akkumulators - mit einer Wärmebildkamera realistisch beobachtet werden kann, um so den weiteren Löschvorgang zielgenau auszurichten und durchzuführen.

Besonders vorteilhaft kann es hierfür sein, wenn die Heiz-Brennervorrichtung mehrere einzeln regelbare Flammen erzeugt, die jeweils mindestens eine der Wärmeabstrahlflächen beheizen. Dadurch kann nämlich erreicht werden, dass die Wärmeabstrahlflächen mit Hilfe der Heiz-Brennervorrichtung auf unterschiedliche Temperaturen aufheizbar sind. Beim Üben mit einer Wärmebildkamera können so stark unterschiedliche Aufheizungen, insbesondere lokale "hot spots", beobachtet werden, die mit der Brandschutzübungsvorrichtung erzeugt werden. Dadurch kann insbesondere das sichere Identifizieren solcher "hot spots" trainiert werden. Um die einzelnen Flammen regeln zu können, kann die Heiz-Brennervorrichtung über mehrere, vorzugsweise fernsteuerbare, Regelmittel verfügen, wie beispielsweise ansteuerbare oder einstellbare Durchflussventile zum Steuern eines jeweiligen Brennstoffflusses zur jeweiligen Flamme.

Ein mögliches Training, welches mit einer erfindungsgemäßen Brandschutzübungsvorrichtung ausgeführt werden kann, besteht also in einer Temperaturverlaufsmessung mithilfe von Wärmebildkameras als Löschhilfsmittel, wobei mit der Wärmebildkamera eine zeitliche Entwicklung der Temperatur der Wärmeabstrahlflächen der Brandschutzübungsvorrichtung beobachtet wird. Somit schlägt die Erfindung also auch ein Verfahren zum Trainieren von Brandszenarien von elektrischen Akkumulatoren vor, welches dadurch gekennzeichnet ist, dass Wärmeabstrahlflächen einer erfindungsgemäßen Brandschutzübungsvorrichtung, die vorzugsweise mittels einer Heiz-Brennervorrichtung beheizt werden, mithilfe einer Wärmebildkamera beobachtet werden, insbesondere um einen zeitlichen Verlauf einer Temperatur der Wärmeabstrahlflächen aufzuzeichnen.

Ein solches Training ist gerade deshalb relevant, weil außer Kontrolle geratene Akkumulatoren-Brände in der Praxis oftmals nicht kurzzeitig löschbar sind, sondern es vielmehr darum geht, mittels Wasser eine Kühlung zu erreichen, um den Brand zumindest nicht auf die angrenzende Umgebung übergreifen zu lassen.

Wie im Folgenden noch erläutert wird, lässt sich mit einer erfindungsgemäßen Brandschutzübungsvorrichtung der Umgang mit brennenden E-Fahrzeugen sicher und effizient trainieren. Hierbei können unterschiedliche Phasen der Brandentstehung von havarierten Lithium-Ionen-Akkumulatoren simuliert werden. Ein wesentlicher Vorteil beim Training mit der Vorrichtung besteht darin, dass jedes Brand-Teilszenario beliebig oft wiederholt werden kann, anders als etwa beim Üben mit einem in Brand gesetzten realen Akkumulator.

Vorteilhaft an der Verwendung einer Heiz-Brennervorrichtung zum Beheizen der Wärmeabstrahlflächen ist, dass diese mit umweltfreundlichem Propangas vergleichsweise einfach betrieben werden kann, ohne dass ein realer Lithium-Ionen-Akku für Übungszwecke in Brand gesetzt werden muss. Die Beheizung mittels einer Flamme ist dabei wesentlich effizienter und einfacher zu realisieren als etwa die elektrische Beheizung von Wärmeabstrahlflächen.

Der Hintergrund für den Ansatz der vorliegenden Erfindung besteht darin, dass die immer größere Verbreitung von Fahrzeugen mit elektrischem Antriebssystem (E-Fahrzeuge) die Feuerwehren vor neue Herausforderungen stellt, weil diese E-Fahrzeuge (PKW oder auch in naher Zukunft immer mehr LKWs) über sehr große elektrische Akkumulatoren als Energiequelle verfügen. Anders als herkömmliche Blei-Akkus, wie sie in herkömmlichen Fahrzeugen mit Verbrennungsmotoren als Hilfsenergiequelle verwendet wurden, weisen die heutigen typischen Lithium-Ionen-Akkumulatoren, die in E-Fahrzeugen zum Einsatz kommen, eine enorm hohe Energiedichte auf. Die bei Defekten entstehenden Schwelbrände innerhalb der Batterie sind dabei nicht vergleichbar mit einem Brand eines Fahrzeugs mit Verbrennungsmotor und erfordern daher völlig neue Löschansätze, die es wirksam zu trainieren gilt.

Vielfach können solche Akkumulatoren-Brände nicht einfach kurzfristig gelöscht werden. Vielmehr müssen unterschiedliche Löschtaktiken trainiert werden, die zum Beispiel das Kühlen des Akkumulators mit Wasser und die Kontrolle der Feuerausbreitung zum Ziel haben.

Die erfindungsgemäße Brandschutzübungsvorrichtung bietet hierfür eine einfach zu handhabende und sicher zu benutzende Trainings-Lösung, um derartige neuartige Brandszenarien von elektrischen Akkumulatoren auf vielfältige Weise zu trainieren. Die Übenden können dadurch gefahrlos den Umgang mit passenden Löschmitteln, aber auch neuartigen Löschhilfen wie Wärmebildkameras und speziellen Löschdecken effektiv üben, wie im Folgenden im Detail erläutert wird. Mittels einer erfindungsgemäßen Brandschutzübungsvorrichtung kann so jeder Schritt der Brandbekämpfung speziell für Brände von elektrischen Akkumulatoren von E-Fahrzeugen trainiert werden.

Eine erfindungsgemäße Brandschutzübungsvorrichtung bietet dabei insbesondere die Möglichkeit, in einem realistischen Übungs-Szenario das Kühlen eines elektrischen Akkumulators mit Wasser zu üben, wobei die Abstrahlflächen gerade die durch einen inneren Schwelbrand oder Kurzschluss aufgeheizte Akkumulator-Außenhülle simulieren, die es mit Wasser zu kühlen gilt.

Auch das Abdichten eines Akkumulator-Brands mit Hilfe von speziellen, insbesondere erfindungsgemäßen, Löschdecken lässt sich anhand der erfindungsgemäßen Brandschutzübungsvorrichtung einfach und sicher üben.

Eine erfindungsgemäße Brandschutzübungsvorrichtung kann dabei beispielsweise Wärmeabstrahlflächen, in der Form vergleichbar mit einem Batterieblock, mit einer Grundfläche von ca. 1300 mm x 600 mm aufweisen; die Vorrichtung kann ferner so flach gebaut werden, beispielsweise mit einer maximalen Höhe von weniger als 200 mm, dass die Brandschutzübungsvorrichtung unter das Fahrwerk typischer Fahrzeuge passt. Dadurch kann die Brandschutzübungsvor-richtung zusammen mit realistischen Übungskarosserien (etwa von zur Verschrottung vorgesehenen Alt-Fahrzeugen) eingesetzt werden, um die Übung noch realistischer zu gestalten, wie ebenfalls noch erläutert wird.

Die Brandschutzübungsvorrichtung kann ein Traggestell aufweisen, vorzugweise in Form eines Gestellrahmens. An diesem Traggestell können beispielsweise sämtliche Komponenten der Vorrichtung mit Ausnahme einer zugehörigen Fernbedienung montiert sein.

Die Brandschutzübungsvorrichtung kann darüber hinaus wenigstens ein Rad, vorzugsweise wenigstens zwei Räder, aufweisen, sodass die gesamte Vorrichtung einfach verfahren werden kann, insbesondere um diese unter eine Übungskarosserie zu schieben. Diese Räder können beispielsweise als einfache Rollen ausgestaltet und/oder an dem Traggestell der Brandschutzübungsvorrichtung montiert sein.

Die erfindungsgemäße Brandschutzübungsvorrichtung kann noch durch weitere vorteilhafte Ausführungen verbessert werden, die in den Unteransprüchen und im Folgenden beschrieben werden:
Beispielsweise ist es für ein möglichst realistisches Brand-Szenario vorteilhaft, wenn die Wärmeabstrahlflächen durch, vorzugsweise quaderförmige Blöcke, die besonders bevorzugt aus Metall gefertigt sein können, gebildet sind. Hierbei können die Blöcke jeweils die Form eines Akkumulator-Blocks simulieren, sodass das zuvor beschriebene Training mit der Wärmebildkamera möglichst realistisch ablaufen kann.

Aus demselben Gesichtspunkt heraus ist es ferner vorteilhaft, wenn die Heiz-Brennervorrichtung jeweilige Flammen erzeugt, die die Wärmeabstrahlflächen von unten beheizen, ohne dass die Flammen von außen sichtbar sind. Zu diesem Zweck können insbesondere jeweilige Brennstoffaustrittsöffnungen der Heiz-Brennervorrichtung Flammen nach oben abgeben. Besonders einfach lässt sich eine solche Ausgestaltung realisieren, wenn die Brennstoffaustrittsöffnungen innerhalb eines jeweiligen Raums angeordnet sind, der von einem jeweiligen der Blöcke begrenzt ist.

Die Brandschutzübungsvorrichtung kann ferner ein, vorzugsweise mechanisches, Einstellmittel aufweisen. Dieses Einstellmittel kann zum Beispiel in Form einer einfachen Einstellschraube ausgebildet sein. Mit dem Einstellmittel kann die Intensität wenigstens einer Flamme der Heiz-Brennervorrichtung und damit die Temperatur wenigstens einer der Wärmeabstrahlflächen, also insbesondere wenigstens eines der Blöcke, eingestellt werden.

Um mehr Variabilität in den Übungen mit der Brandschutzübungsvorrichtung zu schaffen, kann diese ferner eine Flammen-Brennervorrichtung aufweisen zur Erzeugung einer (offenen) Flammenfront. Bei einer solchen Ausgestaltung ist es für ein realistisches Brand-Szenario vorteilhaft, wenn mehrere Brennstoffaustrittsöffnungen der Flammen-Brennervorrichtung zwischen den Wärmeabstrahlflächen, insbesondere zwischen den besagten Blöcken, angeordnet sind. Denn in diesem Fall können die Flammen der Flammen-Brennervorrichtung zwischen den Wärmeabstrahlflächen, insbesondere zwischen den Blöcken, nach oben aufsteigen/lodern.

Sowohl die Heiz-Brennervorrichtung als auch die Flammen-Brennervorrichtung können vorzugsweise als Gas-Trockenbrenner ausgestaltet sein.

Mittels der Flammen-Brennervorrichtung kann ein (zum Beispiel gerade einsetzender) Akkumulator-Vollbrand simuliert werden, wobei dann Flammen zwischen den Wärmeabstrahlflächen/zwischen den Blöcken nach oben lodern. Neben einem Schwelbrand in einem elektrischen Akkumulator lässt sich somit also auch ein Vollbrand eines solchen Akkumulators mit der erfindungsgemäßen Brandschutzübungsvorrichtung simulieren.

Wenn die Kühlung eines realen Akkumulator-Brands nicht ausreichend ist, kann es vorkommen, dass sich der Akkumulator entzündet, sodass es also zu einer Flammenentwicklung kommt, wobei dann auch Stichflammen auftreten können und es darüber hinaus zu Explosionen innerhalb des Akkumulators kommen kann.

Um derartige Brand-Szenarien realistisch simulieren zu können, wird vorgeschlagen, dass die Brandschutzübungsvorrichtung optional eine Stichflammen-Brennervorrichtung aufweisen kann, die zur Erzeugung wenigstens einer Stichflamme aus einem flüssigen Brennstoff eingerichtet ist.

Die Stichflamme-Brennervorrichtung kann beispielsweise ein kreuzförmig ausgestaltetes Rohr mit einem Brennstoffeinlass und je drei Brennstoffauslassöffnungen, jeweils angeordnet an den Enden des Kreuzes, aufweisen. Die Brennstoffauslassöffnungen können dabei zum Beispiel durch dreiecksförmige Einkerbungen an den Rohrenden gebildet sein. Aus den Brennstoffauslassöffnungen kann dann eine jeweilige Stichflamme abgegeben werden, wenn das flüssige Brennmittel unter hohem Druck durch das Rohr geleitet wird.

Auf Basis derselben Überlegungen kann die Brandschutzübungsvorrichtung ferner optional eine Explosions-Brennervorrichtung aufweisen, die eine Aufnahme zum Aufnehmen von Kartuschen (Gaskartuschen oder auch Pulver-Kartuschen) aufweist. Hierdurch kann erreicht werden, dass in die Aufnahme eingesetzte Kartuschen mittels Flammen der Explosions-Brennervorrichtung beheizbar sind und somit zur Explosion gebracht werden können. Eine bevorzugte Ausgestaltung sieht dabei vor, dass die Aufnahme in Form eines Rohrs ausgebildet ist, welches nach oben offene Schlitze aufweist, durch welche Explosionsteile von in das Rohr eingesetzten Gas-Kartuschen ausgestoßen werden können. Diese Schlitze können zum Beispiel mittels einer Gitterstruktur ausgebildet sein. Ferner kann die Aufnahme mittels einer mechanischen Sicherung abschließbar ausgestaltet sein.

Um den Effekt der (Übungs-)Explosion zu verstärken, können bei einer Übung auch weitere kleinere lose Explosionsteile wie etwa Reifen-Stücke auf oder in die Explosionsvorrichtung gegeben werden, die dann durch die Explosion durch die Luft fliegen. Bruchstücke der Gaskartuschen können hingegen aufgrund der Schlitze sicher zurückgehalten werden, sodass keine Gefahr für den Übenden besteht.

Die Brandschutzübungsvorrichtung kann auch einen Gasanschluss zum Anschließen einer Gas-Quelle aufweisen, sofern die Brandschutzübungsvorrichtung nicht über eine integrierte Gas-Quelle verfügt. Dieser Gasanschluss kann beispielsweise der Versorgung der Heiz-Brennervorrichtung und/oder der Flammen-Brennervorrichtung und/oder der Explosions-Brennervorrichtung mit einem Brenngas dienen.

Die Brandschutzübungsvorrichtung kann ferner über ein Druckreduzierventil verfügen, mit dem ein an dem Gasanschluss anliegender Eingangsgasdruck auf einen Betriebsgasdruck reduzierbar ist. Mit dem Betriebsgasdruck lässt sich dann die Heiz-Brennervorrichtung und/oder die Flammen-Brennervorrichtung und/oder die Explosions-Brennervorrichtung wirkungsvoll betreiben.

Die Brandschutzübungsvorrichtung kann ferner, vorzugsweise über eine Fernbedienung ansteuerbare, jeweilige Durchflussventile aufweisen, die einen jeweiligen Brennstofffluss zur jeweiligen Brennervorrichtung regeln. Wird beispielsweise das der Flammen-Brennervorrichtung zugeordnete Ventil geöffnet, so strömt Brenngas aus den Brennstoffaustrittsöffnungen der Flammen-Brennervorrichtung und kann über eine bereits brennende Pilot-Flamme der Heiz-Brennervorrichtung entzündet werden.

Die Brandschutzübungsvorrichtung kann darüber hinaus einen Flüssigbrennstoffanschluss zum Anschließen einer Flüssig-Brennstoffquelle aufweisen. Bei einer solchen Ausgestaltung ist es vorzuziehen, wenn der Flüssigbrennstoffanschluss ein elektrisch beheizbares Durchflussventil aufweist, da dadurch die Sicherheit im Betrieb wesentlich erhöht wird. Insbesondere kann der Flüssigbrennstoffanschluss der Versorgung der Stichflammen-Brennervorrichtung mit einem flüssigen Brennstoff wie zum Beispiel flüssigem Propan dienen. Als Quelle für den Flüssigbrennstoff, kann beispielsweise eine auf dem Kopf stehende Propangasflasche verwendet werden, wobei sich dann flüssiges Propan am Kopfende der Flasche ansammelt und dort über eine Entnahmeventil aus der Flasche bezogen werden kann.

Um die Brandschutzübungsvorrichtung möglichst einfach zu gestalten ist es ferner vorzuziehen, wenn jeweilige Brennstoffaustrittsöffnungen der Flammen-Brennervorrichtung und/oder der Stichflammen-Brennervorrichtung und/oder der Explosions-Brennervorrichtung jeweils so angeordnet sind, dass die jeweilige Brennervorrichtung (jeweils) mittels einer Pilotflamme der Heiz-Brennervorrichtung entzündbar ist. Brennt somit die Pilotflamme, und wird das Gasdurchflussventil einer der anderen Brennervorrichtungen geöffnet, so entzündet die Pilotflamme das Gas, welches aus der gerade geöffneten weiteren Brennervorrichtung ausströmt. Hierbei kann die Pilotflamme der Heiz-Brennervorrichtung, vorzugsweise über eine Fernbedienung, mittels einer in die Brandschutzübungsvorrichtung integrierten Zündvorrichtung entzündbar sein. Auch hierdurch wird die Sicherheit bei Übungen wesentlich verbessert.

Um die mit der Brandschutzübungsvorrichtung erzeugten Brand-Szenarien noch realistischer zu gestalten, kann vorgesehen sein, dass die Brandschutzübungsvorrichtung einen Rauchgenerator aufweist. In diesem Fall kann wenigstens eine Rauchgasleitung bis zu den Wärmeabstrahlflächen geführt sein, sodass Rauch, der mit dem Rauchgenerator erzeugt wird, in unmittelbarer Nachbarschaft zu den Abstrahlflächen aufsteigen kann. Dadurch kann besonders realistisch ein Schwelbrand innerhalb eines elektrischen Akkumulators simuliert werden.

Schließlich ist es für eine sichere Benutzung der Brandschutzübungsvorrichtung vorteilhaft, wenn diese eine Fernbedienung zum Steuern der mit der Brandschutzübungsvorrichtung erzeugten Brandszenarien umfasst. Denn in diesem Fall kann ein Lehrender die Brandschutzübungsvorrichtung mittels der Fernbedienung steuern, während ein Übender das Löschen mithilfe der Brandschutzübungsvorrichtung übt. Bei einer solchen Ausgestaltung ist es vorzuziehen, wenn mittels der Fernbedienung
- eine Zündvorrichtung zum Entzünden einer Pilotflamme der Heiz-Brennervorrichtung und/oder
- wenigstens ein Durchflussventil zur Versorgung der Heiz-Brennervorrichtung und/oder der Flammen-Brennervorrichtung und/oder der Explosions-Brennervorrichtung mit Brennstoff und/oder
- ein, insbesondere das zuvor beschriebene elektrisch beheizbare, Durchflussventil des Flüssigbrennstoffanschlusses und/oder
- ein, insbesondere der zuvor erwähnte, Rauchgenerator und/oder
- wenigstens ein Einstellmittel zum Regeln einer Intensität (wenigstens) einer Flamme der Heiz-Brennervorrichtung fernsteuerbar ist.

Die Fernbedienung kann zum Beispiel als ortsstabiles Steh- und Steuerpult ausgestaltet sein oder beispielsweise als einfach zu transportierendes Handgerät. Die Übertragung der Steuerungsbefehle von der Fernbedienung zur Brandschutzübungsvorrichtung kann vorzugsweise kabelgebunden oder aber drahtlos erfolgen, wobei in letzterem Fall die Brandschutzübungsvorrichtung über ein entsprechendes drahtloses Kommunikationsmodul verfügen kann, um eine drahtlose Kommunikation mit der Fernbedienung zu ermöglichen.

Um die sensiblen Komponenten der Brandschutzübungsvorrichtung vor Hitze und Feuer zu schützen, kann insbesondere vorgesehen sein, dass der Gasanschluss, der Flüssigbrennstoffanschluss, gegebenenfalls der besagte Rauchgenerator, sowie eine Schnittstelle zum Anschließen der Fernbedienung in einem von den Brennervorrichtungen abgetrennten Steuerungsmodul angeordnet sind. Hierbei kann das Steuerungsmodul an einer Kopfseite der Brandschutzübungsvorrichtung angeordnet sein. Die Komponenten innerhalb des Steuerungsmoduls können so vergleichsweise einfach durch entsprechende Isolation vor Hitzeeinwirkung durch die Flammen der Brennervorrichtungen geschützt werden, um einen sicheren Übungsbetrieb zu ermöglichen.

Zur Lösung der eingangs genannten Aufgabe wird ferner ein Übungs-Set vorgeschlagen, welches eine erfindungsgemäße Brandschutzübungsvorrichtung (insbesondere gemäß einem der auf eine solche Vorrichtung gerichteten Ansprüche oder wie zuvor beschrieben) und eine wiederverwendbare, feuerfeste Übungskarosserie umfasst. Die Übungskarosserie kann dabei vorzugsweise aus miteinander verschweißten Metall-Rohren gefertigt sein und/oder die Außenform eines E-Fahrzeugs simulieren. Das Set zeichnet sich nun gerade dadurch aus, dass die Brandschutzübungsvorrichtung unter die Übung-Karosserie gefahren werden kann, wenn die Übungskarosserie auf einer ebenen Fläche abgestellt ist. Mit anderen Worten ist also die Höhe der Brandschutzübungsvorrichtung auf einen Freiraum ausgelegt, der unterhalb der Übungskarosserie besteht.

Zur Lösung der eingangs genannten Aufgabe wird ferner noch ein weiteres Übungs-Set vorgeschlagen. Dieses besteht ebenfalls aus einer erfindungsgemäßen Brandschutzübungsvorrichtung (ausgestaltet wie zuvor beschrieben oder gemäß einem der auf eine solche Vorrichtung gerichteten Ansprüche) und ferner aus einer wiederverwendbaren, feuerfesten Löschdecke. Das erfindungsgemäße Übungs-Set zeichnet sich dadurch aus, dass die Löschdecke eine Löschgasleitung aufweist, durch welche ein Löschgas (beispielsweise CO₂, Argon oder Stickstoff) geleitet werden kann. Hierzu kann die Löschdecke vorzugsweise einen Löschgasanschluss aufweisen, zum Anschließen einer Löschgasquelle beziehungsweise der besagten Löschgasleitung.

Der Löschgasanschluss kann beispielsweise als ein Einfüllstutzen ausgebildet sein, der mit einer Stickstoffflasche verbunden werden kann, um so Stickstoff als Löschgas unter die Löschdecke zu leiten. Dadurch kann Sauerstoff aus einem Bereich verdrängt werden, der durch die Löschdecke abgedeckt ist, mit der Folge, dass in dem Bereich lodernde Flammen kollabieren/ersticken.

Ein weiterer Vorteil des Einsatzes der Löschdecke beim Löschen besteht darin, dass ein mit der Löschdecke abgedeckter brennender Akkumulator kontrolliert abkokeln / vor sich hin schwelen kann, während die Löschdecke von dem Brand ausgehende Strahlungshitze effektiv dämpft. Die hier vorgeschlagene Lösch-Technik ist gerade zum Bekämpfen von Fahrzeugbränden in Parkhäusern relevant, da es dort oftmals nicht möglich ist, mit Feuerwehr-Löschautos nah an den Brand heranzukommen.

Die Löschdecke lässt sich so verwenden, dass ein realer Brand und/oder ein Übungsbrand mittels der Löschdecke abgedeckt wird, sodass sich der Brand innerhalb eines Raums befindet, der durch die Löschdecke begrenzt ist. Anschließend kann in diesen Raum Löschgas über die Löschgasleitung eingeleitet werden, um so eine Entstehung von Flammen innerhalb des Raums weitestgehend zu unterdrücken oder bereits lodernde Flammen zu ersticken. Die Flammen unterdrückende Wirkung wird dabei dadurch erzeugt, dass das Löschgas vorhandenen Sauerstoff in dem von der Löschdecke begrenzten Raum verdrängt (dieser kann nach außen am Rand der Löschdecke austreten). Dadurch besteht innerhalb des Raums keine Atmosphäre mehr, in der eine starke Flammenentwicklung möglich ist. Auch der beschriebene Vorteil der Dämpfung der Strahlungshitze durch die Löschdecke kann so realisiert werden.

Dieser Lösch-Ansatz bietet für das Löschen von Akkumulator-Bränden den Vorteil, dass der chemisch temperierte Zersetzungsprozess, der typischerweise in einem außer Kontrolle geratenen elektrischen Akkumulator abläuft, nun ohne offene Flamme (in gewisser Weise) kontrolliert ablaufen kann, wobei der Akkumulator weiterhin beispielsweise mit Löschwasser gekühlt werden kann, während dieser mit der Löschdecke abgedeckt bleibt.

Eine solche Lösch-Taktik bietet sich etwa an bei einem Brand eines elektrischen Akkumulators eines E-Fahrzeugs, welches gerade in einem Parkhaus/einer Garage abgestellt ist. Denn durch die Verwendung der Löschdecke kann das Überspringen von Flammen auf benachbarte Fahrzeuge wirksam verhindert werden.

Somit können also zu dem Akkumulator-Brand benachbarte Gegenstände sicher geschützt werden. Ein weiterer Vorteil besteht darin, dass weniger kontaminiertes Löschwasser erzeugt wird, da die starke Hitzeentwicklung im Akkumulator mittels der Löschdecke und dem eingebrachten Löschgas wirksam unterdrückt werden kann.

Gerade solche Brand-Szenarien und entsprechende Lösch-Taktiken lassen sich mit dem zuvor erwähnten Übungsset aus einer erfindungsgemäßen Brandschutzvorrichtung und einer erfindungsgemäßen Löschdecke mit Löschgasleitung wirksam und sicher trainieren.

Die erwähnte Löschdecke kann feuerfest und damit wiederverwendbar ausgestaltet sein und sich dadurch auszeichnen, dass die Löschdecke eine Löschgasleitung aufweist durch welche ein Löschgas in einen von der Löschdecke begrenzten Raum einleitbar ist. Bevorzugt weist die Löschdecke hierzu einen mit der Löschgasleitung verbindbaren (oder verbundenen) Löschgasanschluss auf. Die Löschgasleitung kann ihrerseits ebenfalls einen Löschgasanschluss zum Anschließen der Löschgasleitung an eine Löschgasquelle aufweisen.

Eine solche Löschdecke lässt sich auch zur Kontrolle eines Akkumulator-Brands verwenden. Bei dieser Verwendung wird der Akkumulator-Brand mittels der Löschdecke abgedeckt, sodass sich der Brand innerhalb eines Raums befindet, der durch die Löschdecke begrenzt ist; anschließend wird in diesen Raum Löschgas über die Löschgasleitung eingeleitet. Dadurch kann eine Entstehung von Flammen innerhalb des Raums weitestgehend oder vollständig unterdrückt werden.

Sowohl die zuvor beschriebene Übungskarosserie als auch die besagte Löschdecke können (durch entsprechende Materialwahl, z.B. Stahl für die Metallrohre der Karosserie und Aramid oder Glasfasern als Gewebematerial der Löschdecke) vorzugsweise eine Hitzebeständigkeit bis 1300°C aufweisen. Die Löschdecke kann ferner gasdicht ausgestaltet sein, beispielsweise durch Verwendung einer Silikonbeschichtung. Ferner kann die Löschdecke mit Trageschlaufen ausgestattet sein, die ein sicheres Hantieren und Üben mit der Löschdecke ermöglichen.

Eine für Übungszwecke aber auch für reale Akkumulatorbrände von E-Fahrzeugen geeignete Mindest-Größe der Löschdecke beträgt ca. 5x6 m², bevorzugt sogar 6x8 m². Eine solche Größe ermöglicht es, eine Übungskarosserie in der typischen Größe eines E-Autos, oder aber ein typischer E-Auto vollständig mit der Löschdecke abzudecken, um so einen Akkumulator-Brand unter Kontrolle zu bringen und ein Überspringen des Brands auf benachbarte Fahrzeuge zu verhindern. Dies stellt ein wichtiges Übungs- aber auch reales Lösch-Szenario dar, etwa für die Simulation/das Löschen eines Akkumulatorbrands in einem E-Auto, welches in einem Parkhaus neben anderen Fahrzeugen abgestellt ist.

Die Erfindung wird nun anhand von Ausführungsbeispielen näher beschrieben, ist aber nicht auf diese Ausführungsbeispiele beschränkt. Weitere Ausbildungen der Erfindung können aus der nachfolgenden Beschreibung eines bevorzugten Ausführungsbeispiels in Verbindung mit der allgemeinen Beschreibung, den Ansprüchen sowie den Zeichnungen gewonnen werden.

Bei der nachfolgenden Beschreibung verschiedener bevorzugter Ausführungsformen der Erfindung erhalten in ihrer Funktion übereinstimmende Elemente auch bei abweichender Gestaltung oder Formgebung übereinstimmende Bezugszahlen.

Es zeigt:
- Figur 1: eine schematische Seitenansicht einer erfindungsgemäßen Brandschutzübungsvorrichtung von links,
- Figur 2: eine Draufsicht von oben auf die Brandschutzübungsvorrichtung der Figur 1,
- Figur 3: eine Seitenansicht von rechts auf die Brandschutzübungsvorrichtung der Figur 1,
- Figur 4: eine Ansicht von unten auf die Brandschutzübungsvorrichtung der Figur 1,

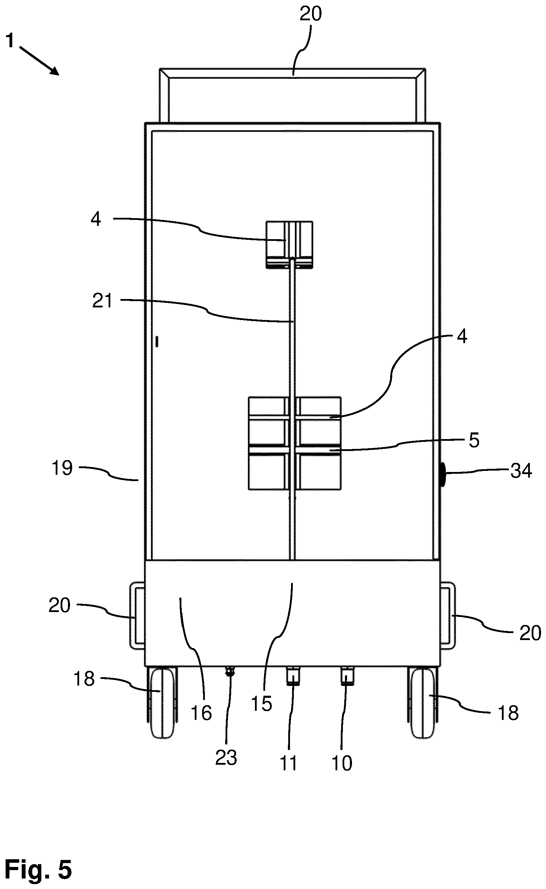

- Figur 5: eine weitere Ansicht von unten auf die Brandschutzübungsvorrichtung der Figur 1,
- Figur 6: ein erfindungsgemäßes Set aus einer Übungskarosserie und der Brandschutzübungsvorrichtung der Figur 1,
- Figur 7: das Set aus Figur 6, nachdem die Brandschutzübungsvorrichtung vollständig unter die Übungskarosserie geschoben wurde, und
- Figur 8: die Verwendung einer Löschdecke zum Löschen eines mit der Brandschutzübungsvorrichtung simulierten Übungsbrands.

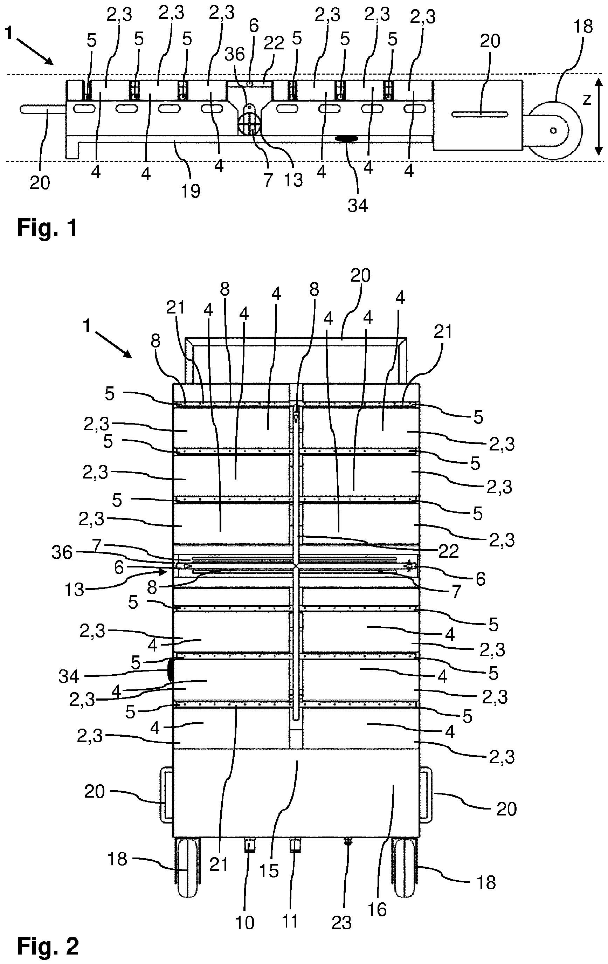

Die Figur 1 zeigt eine erfindungsgemäße Brandschutzübungsvorrichtung 1 mit der sich verschiedene Brandszenarien eines Akkumulators eines E-Fahrzeugs zu Übungszwecken simulieren lassen. Hierbei dient eine erste Heiz-Brennervorrichtung 4, die als Trockengasbrenner ausgestaltet ist, als Wärmequelle.

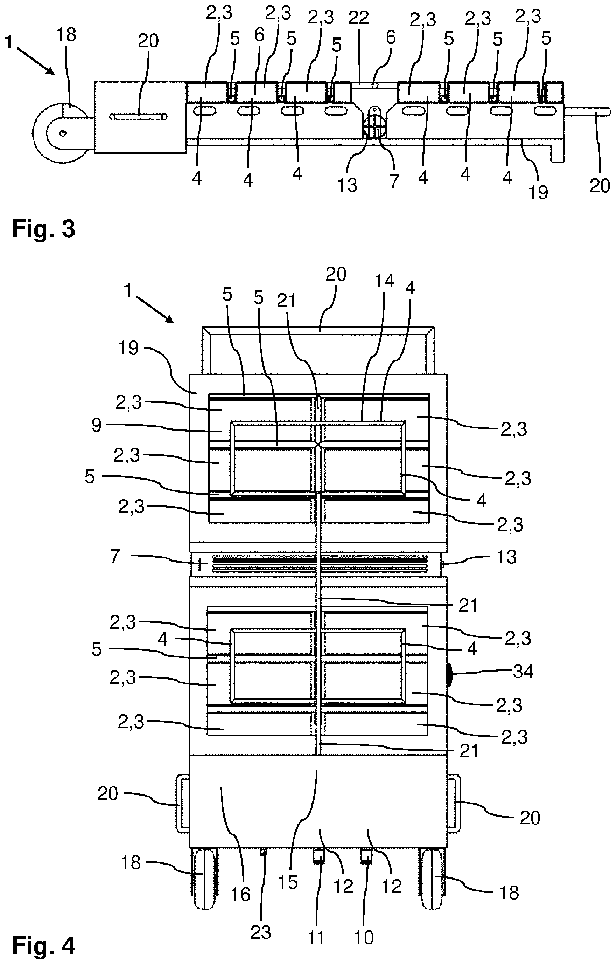

Wie insbesondere in der Draufsicht der Figur 2 zu erkennen ist, bildet die Brandschutzübungsvorrichtung 1 mehrere Wärmeabstrahlflächen 2 aus, die jeweils mittels der Heiz-Brennervorrichtung 4 von unten beheizbar sind. Hierzu weist die Heiz-Brennervorrichtung 4 eine Gasleitung 21 auf, die mit einem Gasanschluss 10 am Kopfende der Vorrichtung 1 verbunden ist und die zahlreiche Brennstoffaustrittsöffnung 8 aufweist (in der Ansicht von unten der Figur 4 nicht zu sehen, da die Brennstoffaustrittsöffnung 8 nach oben ausgerichtet sind), mit der Gasflammen erzeugt werden können, die die Wärmeabstrahlflächen 2 von unten direkt beheizen.

Hierbei werden die Wärmeabstrahlflächen 2 jeweils von einem quaderförmigen Metall-Block 3 ausgebildet, der die Form eines typischen Akkumulators-Blocks aufweist und nach unten offen ausgestaltet ist. Die Brennstoffaustrittsöffnungen 8 der Heiz-Brennervorrichtung 4 befinden sich dabei jeweils innerhalb eines Raums 9, der durch den jeweiligen Block 3 begrenzt wird, sodass die Flammen von außen nicht sichtbar sind. Mittels eines mechanischen Einstellmittels 34 kann die Intensität der Flammen und damit die Temperatur der Wärmeabstrahlflächen 2 eingestellt werden.

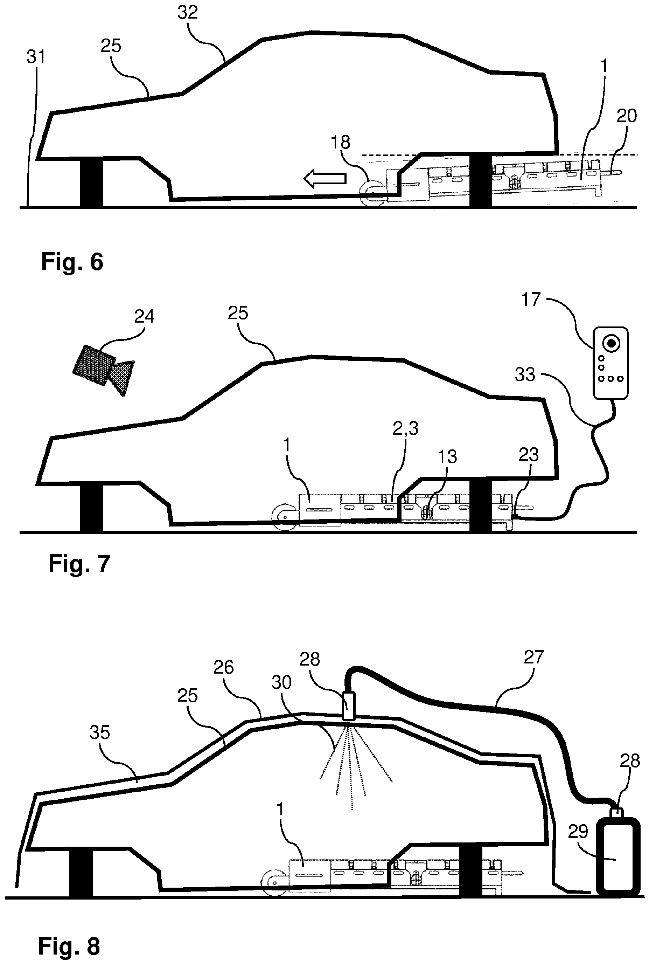

Heizt sich einer der Blöcke 3 aufgrund der Flammen auf, so kann dadurch ein Schwelbrand innerhalb eines elektrischen Akkumulators simuliert werden, denn die Wärmeentwicklung der einzelnen Blöcke 3 kann mittels einer Wärmebildkamera 24 beobachtet werden (Vgl. Figur 7). Hierzu kann auch vorgesehen sein, dass die Heiz-Brennervorrichtung 4 mehrere einzeln über eine Fernbedienung 17 regelbare Flammen erzeugt, die jeweils mindestens eine der Wärmeabstrahlflächen 2 beheizen. In diesem Fall lassen sich die einzelnen Wärmeabstrahlflächen 2 unterschiedlich stark beheizen, sodass lokale "hot spots" simuliert werden können, die mit der Wärmebildkamera 24 gezielt identifiziert werden können, um Löschmittel zur Brandbekämpfung zielgerichtet einzusetzen.

Zwischen den Blöcken 3 sind in der Draufsicht der Figur 2 weitere Gasleitungen 21 zu erkennen, die nach oben offene Brennstoffaustrittsöffnungen 8 ausbilden und zwischen den Blöcken 3 angeordnet sind. Diese Gasleitungen 21 bilden eine zweite Flamm-Brennervorrichtung 5 aus, mit der sich eine sichtbare Flammenfront erzeugen lässt, die zwischen den Wärmeabstrahlflächen 2 aufsteigt. Dadurch lässt sich ein Vollbrand des durch die Blöcke 3 simulierten Akkumulators simulieren.

Um ein weiteres Brandszenario, nämlich das plötzliche Austreten von Stichflammen aus einem im Schwelbrand befindlichen Akkumulator, zu ermöglichen, ist eine dritte Stichflamm-Brennervorrichtung 6 ausgebildet, die durch eine kreuzförmige Flüssigbrennstoffleitung 22 ausgebildet ist, die mit einem separaten Flüssigbrennstoffanschluss 11 verbunden ist, der am Kopfende der Brandschutzübungsvorrichtung 1 angeordnet ist (vgl. Figur 1 und Figur 2). Hierzu sind an den drei freien Enden der Flüssigbrennstoffleitung 22 jeweils dreieckförmige Brennstoffaustrittsöffnungen 8 ausgebildet, aus denen flüssiger Brennstoff austreten kann, um eine Stichflamme zu erzeugen.

Nach dem Zünden von Pilotflammen 14 der Heiz-Brennervorrichtung 4 mittels einer in die Brandschutzübungsvorrichtung 1 integrierten elektrischen Zündvorrichtung 15 und damit dem Aufheizen der Wärmeabstrahlflächen 2, kann durch Öffnen eines Durchflussventils 12, welches einen Gasfluss zur Flamm-Brennervorrichtung 5 steuert, ein Vollbrand simuliert werden, wobei dann Flammen zwischen den Blöcken 3 nach oben lodern. Im nächsten Schritt kam dann ein weiteres Durchflussventil 12, das über eine eigene Beheizung verfügt und einen Fluss von flüssigem unter Druck stehenden Brennstoff vom Flüssigbrennstoffanschluss 11 zur Stichflamm-Brennervorrichtung 6 regelt, geöffnet werden, sodass dann die besagten Stichflammen mit dem flüssigen Brennstoff erzeugt werden können, die aus den drei Öffnungen 8 der kreuzförmigen Flüssigbrennstoffleitung 22 austreten.

Schließlich weist die Brandschutzübungsvorrichtung 1 auch noch eine vierte Explosions-Brennervorrichtung 7 auf mit einer Aufnahme 13 (vgl. Figur 1 und 2), in welche mehrere Gas-Kartuschen der Reihe nach eingeschoben werden können. Am linken Ende (in Figur 2) ist die Aufnahme 13 sicher mittels einer Verriegelung 36 verschließbar. Genauer besteht die Aufnahme 13 aus einem horizontal montierten Rohr, welches nach oben offene Schlitze aufweist, die käfig-artig mittels Gitterstäben zumindest teilweise verschlossen sind. Unterhalb der Aufnahme 13 sind Brennstoffaustrittsöffnung 8 der Explosions-Brennervorrichtung 7 ausgebildet, die über den Gasanschluss 10 mit Brenngas versorgbar ist. Eine Gaskartusche, die in die Aufnahme 13 eingeschoben ist, kann so von unten mittels Gasflammen bis zur Explosion beheizt werden. Durch die Schlitze hindurch können Explosionsteile der Gaskartusche aber auch kleinere in die Aufnahme eingefüllte Explosionsteile wie etwa Reifenstücke ausgestoßen werden. Damit kann das thermische Durchgehen ("thermal-run-away") eines elektrischen Akkumulators mit nachfolgender Explosion realitätsnah simuliert werden.

Auch die Brennstoffaustrittsöffnung 8 der Explosions-Brennervorrichtung 7 sind so in Nähe der Heiz-Brennvorrichtung 4 angeordnet, dass diese mittels einer Pilotflamme 14 der Heiz-Brennvorrichtung 4 entzündet werden kann. Brennt somit die Heiz-Brennvorrichtung 4, so genügt es, einen Gasfluss zur Explosions-Brennervorrichtung 7 durch Ansteuerung eines hierfür vorgesehenen Durchflussventils 12 freizugeben, um so die Gas-Kartuschen zu beheizen und zur Explosion zu bringen. Der zentrale Gasanschluss 10 dient somit der Versorgung der Heiz-Brennervorrichtung 4, der Flamm-Brennervorrichtung 5 und der Explosions-Brennervorrichtung 7 mit Brenngas, während der Flüssigbrennstoffanschluss 11 die Stichflamm-Brennervorrichtung 6 mit flüssigem Propan versorgt.

Die Brandschutzübungsvorrichtung 1 weist ferner noch einen Rauchgenerator 16 auf, der am Kopfende angeordnet ist (vgl. Figur 2) und dessen erzeugter Rauch über eine Rauchgasleitung (nicht in den Figuren gezeigt) bis zu den Abstrahlflächen 2 geleitet werden kann, um dort zwischen den Blöcken 3 aufzusteigen.

Die beschriebenen unterschiedliche Brand-Szenarien können über eine als Steuerpult ausgestaltete Fernbedienung 17, die über eine Steuerleitung 33 mit der Brandschutzübungsvorrichtung 1 verbunden ist (Vgl. Figur 7), in unterschiedlicher Reihenfolge und auch mehrmals nacheinander gestartet werden; hierbei steuert die Fernbedienung 17 die Zündvorrichtung 15 zum Entzünden der Pilotflammen 14 der Heiz-Brennervorrichtung 4, das jeweilige Durchflussventil 12 zur Versorgung der Heiz-Brennervorrichtung 4, der Flamm-Brennervorrichtung 5 und der Explosions-Brennervorrichtung 7, das elektrisch beheizte Durchflussventil 12, welches am Flüssigbrennstoffanschluss 11 angeschlossen ist und die Stichflamm-Brennervorrichtung 6 versorgt, und den Rauchgenerator 16. Dadurch lassen sich über die Fernbedienung 17 folgende Übungs-Brandszenarien durchspielen:
I) Thermisches Aufheizen: Hierzu werden die einzelnen Wärmeabstrahlflächen 2, die in Ihrer Form wie Batterieblöcke ausgeführt sind, über gasbetriebene Flammen der Heiz-Brennervorrichtung 4 aufgeheizt. Als Training kann dann über eine Wärmebildkamera 24 die Temperatur der Blöcke 3 fortlaufend gemessen werden, um den Zustand der (simulierten) Batterie einschätzen zu können.
II) Rauchentwicklung: Über einen Rauchgenerator 16 wird hierzu weißer Rauch erzeugt, der zwischen den Wärmeabstrahlflächen 2 aufsteigt. Auch hier besteht das Training darin, den Zustand der Batterie realistisch einzuschätzen.
III) Brennen eines Batterieblocks mit Absprenggeräuschen: Hierzu können mittels der Flamm-Brennervorrichtung 5 offene Flammen von ca. 1.5 m bis 2 m Höhe gebildet werden, die aus dem simulierten Batterieblock (d.h. zwischen den Wärmeabstrahlflächen 2) aufsteigen. Das zugehörige Training besteht in Löschversuchen durch Kühlen des Batterieblocks, und/oder das Eindämmen der Flamm- und Rauchausbreitung mit einer wie zuvor beschriebenen Löschdecke.
IV) Absprengen von Teilen und Funkensprühen: Hierzu können Explosionen von Gas-Kartuschen erzeugt werden, die in die Aufnahme 13 der Explosions-Brennervorrichtung 7 eingesetzt sind und dort mittels selbiger bis zur Explosion erhitzt werden. Zusätzlich können Stichflammen in mehrere Richtungen mittels der Stichflamm-Brennervorrichtung 6 abgegeben werden. Damit kann das Erkennen des Batteriezustandes und ein thermisches Durchgehen ("thermal run away effect") eines Akkumulators trainiert werden.

Mit einer derart ausgestalteten erfindungsgemäßen Brandschutzübungsvorrichtung 1 lassen sich somit unterschiedliche Trainingsziele erreichen:
a) Das Erkennen des Zustandes eines Lithium-Ionen-Akkumulators eines E-Fahrzeugs.
b) Das effiziente Herunterkühlen von Akkumulator-Blöcken mit Hilfe von Wasser als Löschmittel.
c) Das Löschen unter erschwerten Sichtbehinderungen, aufgrund von starker Rauchbildung.
d) Der Umgang mit Extremsituationen wie einem thermal-run-away des Akkumulators mit Explosion und Stichflammenbildung.

Wie anhand der beiden Figuren 6 und 7 illustriert ist, ist die Brandschutzübungsvorrichtung 1 zur Verwendung mit einer feuerfesten und daher wiederverwendbaren Übungskarosserie 25 vorgesehen, die aus Metallrohren zusammen geschweißt ist und die Außenform 32 eines E-Fahrzeugs simuliert. Mit Hilfe des Transportgriffs 20 am hinteren Ende und der beiden Transportrollen 18 am Kopfende der Brandschutzübungsvorrichtung 1 kann diese unter die Übungskarosserie 25 geschoben werden, wenn diese auf einer ebenen Fläche 31 abgestellt ist (Vgl. Figur 7). Dadurch kann die beschriebene Übung unter Verwendung einer Wärmebildkamera 24 besonders realistisch ablaufen.

Die Figur 8 illustriert die Verwendung einer Löschdecke 26 zur Kontrolle eines Brands eines elektrischen Akkumulators innerhalb eines E-Fahrzeugs, was realistisch mit Hilfe der Übungskarosserie 25 und der Brandschutzübungsvorrichtung 1 trainiert werden kann: Die aus Glasfasergewebe hergestellte feuerfeste und daher wiederholt verwendbare Löschdecke 26 ist so groß ausgestaltet, dass Sie über eine typische Karosserie eines E-Fahrzeugs gelegt werden kann; sie verfügt ferner über einen als Schlauchkupplung 39 ausgestalteten Löschgasanschluss 28, an welcher eine Löschgasleitung 27 anschließbar ist, um Löschgas 30 aus einer Löschgasquelle 29 in den von der Löschdecke 26 begrenzten Raum 35 zu leiten, in welchem sich die Karosserie 25 und damit der Akkumulator bzw. die Brandschutzübungsvorrichtung 1 befindet. Die Löschgasleitung 27 ist ihrerseits über einen weiteren Löschgasanschluss 28 gasdicht mit der Löschgasquelle 29 verbunden. Diese Löschdecke 26 eignet sich somit nicht nur für Feuerlöschübungen, wie in Figur 8 illustriert, sondern auch zum Löschen / Kontrollieren realer Brände eines Akkumulators eines E-Fahrzeugs 38.

Zusammenfassend wird zur Verbesserung von Trainingsmöglichkeiten von verschiedenen Brand-Szenarien eine Brandschutzübungsvorrichtung 1 vorgeschlagen, mit welcher ein flammenloser, thermischer Zersetzungsprozess innerhalb eines elektrischen Akkumulators realitätsnah simuliert werden kann, um eine entsprechende Löschübung zu ermöglichen. Hierzu weist die Brandschutzübungsvorrichtung 1 mehrere quaderförmige Metallteile auf, die innenseitig mittels wenigstens einer Heizflamme einer Heiz-Brennervorrichtung 4 beheizbar sind, sodass sich die Metallteile aufheizen und Hitze abstrahlen, vergleichbar mit der Außenhülle eines Akkumulators, der sich aufgrund eines Kurzschlusses oder thermischen Zersetzungsprozesses stark aufheizt. Hierbei sind die Heizflammen von außen nicht sichtbar, aber die Aufheizung der Metallteile mit einer Wärmebildkamera 24 beobachtbar. Darüber hinaus kann die Brandschutzübungsvorrichtung 1 noch einfach angepasst/erweitert werden, um einen Akkumulatorvollbrand, insbesondere unter Entwicklung von Stichflammen und/oder Rauchentwicklung, und eine Akkumulator-explosion für Übungszwecke zu simulieren.

### Bezugszeichenliste

- 1: Brandschutzübungsvorrichtung
- 2: Wärmeabstrahlfläche
- 3: Block
- 4: Heiz-Brennervorrichtung
- 5: Flamm-Brennervorrichtung
- 6: Stichflamm-Brennervorrichtung
- 7: Explosions-Brennervorrichtung
- 8: Brennstoffaustrittsöffnung (von 4/5/6/7)
- 9: Raum (begrenzt durch 3)
- 10: Gasanschluss
- 11: Flüssigbrennstoffanschluss
- 12: Durchflussventil
- 13: Aufnahme (von 7, zur Aufnahme von Gas-Kartuschen)
- 14: Pilotflamme (von 4)
- 15: Zündvorrichtung
- 16: Rauchgenerator
- 17: Fernbedienung
- 18: Transportrollen/-räder
- 19: Traggestell
- 20: Transportgriff
- 21: Gasleitung
- 22: Flüssigbrennstoffleitung
- 23: Steuerschnittstelle
- 24: Wärmebildkamera
- 25: Übungskarosserie
- 26: Löschdecke
- 27: Löschgasleitung
- 28: Löschgasanschluss
- 29: Löschgasquelle
- 30: Löschgas
- 31: ebene Fläche (zum Aufstellen von 25)
- 32: Außenform (von 25)
- 33: Steuerleitung
- 34: Einstellmittel (zum Einstellen der Flammen von 4)
- 35: Raum (begrenzt von 26)
- 36: mechanische Sicherung / Verriegelung
- 37: Trageschlaufen
- 38: E-Fahrzeug
- 39: Schlauchkupplung

## Patentansprüche

1. **Brandschutzübungsvorrichtung (1)** zum Erzeugen wenigstens eines realistischen Brandszenarios zu Übungszwecken, mit
- einer Heiz-Brennervorrichtung (4), die als Wärmequelle dient, **dadurch gekennzeichnet,**
- **dass** die Brandschutzübungsvorrichtung (1) mehrere Wärmeabstrahlflächen (2) aufweist, die mittels der Heiz-Brennervorrichtung (4), vorzugsweise direkt, beheizbar sind, sodass die Wärmeabstrahlflächen (2) einen Schwelbrand innerhalb eines elektrischen Akkumulators simulieren.

2. Brandschutzübungsvorrichtung (1) nach Anspruch 1, wobei die Heiz-Brennervorrichtung (4) mehrere einzeln regelbare Flammen erzeugt, die jeweils mindestens eine der Wärmeabstrahlflächen (2) beheizen,
- insbesondere sodass die Wärmeabstrahlflächen (2) mit Hilfe der Heiz-Brennervorrichtung (4) auf unterschiedliche Temperaturen aufheizbar sind.

3. Brandschutzübungsvorrichtung (1) nach Anspruch 1 oder 2, wobei die Wärmeabstrahlflächen (2) durch, vorzugsweise quaderförmige, Blöcke (3), besonders bevorzugt aus Metall, gebildet sind, die jeweils die Form eines Akkumulator-Blocks simulieren.

4. Brandschutzübungsvorrichtung (1) nach einem der vorhergehenden Ansprüche, wobei die Heiz-Brennervorrichtung (4) jeweilige Flammen erzeugt, die die Wärmeabstrahlflächen (2) von unten beheizen, ohne dass die Flammen von außen sichtbar sind,
- insbesondere wobei hierzu jeweilige Brennstoffaustrittsöffnungen (8) der Heiz-Brennervorrichtung (4) Flammen nach oben abgeben und/oder innerhalb eines jeweiligen Raums (9) angeordnet sind, der von einem jeweiligen der Blöcke (3) begrenzt ist.

5. Brandschutzübungsvorrichtung (1) nach einem der vorhergehenden Ansprüche, wobei die Brandschutzübungsvorrichtung (1) ein, vorzugsweise mechanisches, Einstellmittel (34), insbesondere in Form einer Einstellschraube, aufweist, mit dem sich die Intensität wenigstens einer Flamme der Heiz-Brennervorrichtung (4) und damit die Temperatur wenigstens einer der Wärmeabstrahlflächen (2), insbesondere wenigstens eines der Blöcke (3), einstellen lässt.

6. Brandschutzübungsvorrichtung (1) nach einem der vorhergehenden Ansprüche, wobei die Brandschutzübungsvorrichtung (1) ferner eine Flamm-Brennervorrichtung (5) zur Erzeugung einer Flammenfront aufweist,
- vorzugsweise wobei mehrere Brennstoffaustrittsöffnungen (8) der Flamm-Brennervorrichtung (5) zwischen den Wärmeabstrahlflächen (2), insbesondere zwischen den Blöcken (3), angeordnet sind,
- insbesondere sodass Flammen der Flamm-Brennervorrichtung (5) zwischen den Wärmeabstrahlflächen (2), insbesondere zwischen den Blöcken (3), nach oben aufsteigen können.

7. Brandschutzübungsvorrichtung (1) nach einem der vorhergehenden Ansprüche, wobei die Brandschutzübungsvorrichtung (1) eine Stichflamm-Brennervorrichtung (6) aufweist, die zur Erzeugung wenigstens einer Stichflamme aus einem flüssigen Brennstoff eingerichtet ist.

8. Brandschutzübungsvorrichtung (1) nach einem der vorhergehenden Ansprüche, wobei die Brandschutzübungsvorrichtung (1) eine Explosions-Brennervorrichtung (7) aufweist, die eine Aufnahme (13) zur Aufnahme von Kartuschen aufweist,
- sodass in die Aufnahme (13) eingesetzte Kartuschen mittels Flammen der Explosions-Brennervorrichtung (7) beheizbar sind und zur Explosion gebracht werden können,
- vorzugsweise wobei die Aufnahme (13) in Form eines Rohrs ausgebildet ist, welches nach oben offene Schlitze aufweist, durch welche Explosionsteile von in das Rohr eingesetzten Kartuschen ausgestoßen werden können und/oder
- wobei die Aufnahme (13) mittels einer mechanischen Sicherung (36) abgeschlossen werden kann.

9. Brandschutzübungsvorrichtung (1) nach einem der vorhergehenden Ansprüche, wobei die Brandschutzübungsvorrichtung (1) einen Gasanschluss (10) zum Anschließen einer Gas-Quelle aufweist,
- vorzugsweise wobei der Gasanschluss (10) der Versorgung der Heiz-Brennervorrichtung (4) und/oder der Flamm-Brennervorrichtung (5) und/oder der Explosions-Brennervorrichtung (7) mit einem Brenngas dient.

10. Brandschutzübungsvorrichtung (1) nach einem der vorhergehenden Ansprüche, wobei die Brandschutzübungsvorrichtung (1) einen Flüssigbrennstoffanschluss (11) zum Anschließen einer Flüssig-Brennstoffquelle aufweist,
- vorzugsweise wobei der Flüssigbrennstoffanschluss (11) ein elektrisch beheizbares Durchflussventil (12) aufweist,
- insbesondere wobei der Flüssigbrennstoffanschluss (11) der Versorgung der Stichflamm-Brennervorrichtung (6) mit einem flüssigen Brennstoff wie zum Beispiel flüssigem Propan dient.

11. Brandschutzübungsvorrichtung (1) nach einem der vorhergehenden Ansprüche, wobei jeweilige Brennstoffaustrittsöffnungen (8) der Flamm-Brennervorrichtung (5) und/oder der Stichflamm-Brennervorrichtung (6) und/oder der Explosions-Brennervorrichtung (7) jeweils so angeordnet sind, dass die jeweilige Brennervorrichtung (5, 6, 7) mittels einer Pilotflamme (14) der Heiz-Brennervorrichtung (4) entzündbar ist,
- insbesondere wobei die Pilotflamme (14) der Heiz-Brennervorrichtung (4), vorzugsweise über eine Fernbedienung (17), mittels einer in die Brandschutzübungsvorrichtung (1) integrierten Zündvorrichtung (15) entzündbar ist.

12. Brandschutzübungsvorrichtung (1) nach einem der vorhergehenden Ansprüche, wobei die Brandschutzübungsvorrichtung (1) einen Rauchgenerator (16) aufweist, und
- wobei wenigstens eine Rauchgasleitung von dem Rauchgenerator (16) bis zu den Wärmeabstrahlflächen (2) geführt ist, sodass mit dem Rauchgenerator (16) erzeugter Rauch in unmittelbarer Nachbarschaft zu den Abstrahlflächen (2) aufsteigen kann.

13. Brandschutzübungsvorrichtung (1) nach einem der vorhergehenden Ansprüche, wobei die Brandschutzübungsvorrichtung (1) eine Fernbedienung (17) zum Steuern der mit der Brandschutzübungsvorrichtung (1) erzeugen Brandszenarien umfasst,
- vorzugsweise wobei mittels der Fernbedienung (17)
- eine Zündvorrichtung (15) zum Entzünden einer Pilotflamme (14) der Heiz-Brennervorrichtung (4) und/oder
- wenigstens ein Durchflussventil (12) zur Versorgung der Heiz-Brennervorrichtung (4) und/oder der Flamm-Brennervorrichtung (5) und/oder der Explosions-Brennervorrichtung (7) mit Brennstoff
und/oder
- ein, insbesondere das, Durchflussventil (12) des Flüssigbrennstoffanschlusses (11)
und/oder
- ein, insbesondere der, Rauchgenerator (16) und/oder
- wenigstens ein Einstellmittel zum Regeln einer
Intensität einer Flamme der Heiz-Brennervorrichtung (4) fernsteuerbar ist.

14. **Übungs-Set** aus
- einer Brandschutzübungsvorrichtung (1) gemäß einem der vorhergehenden Ansprüche und
- einer wiederverwendbaren, feuerfesten Übungskarosserie (25), **dadurch gekennzeichnet,**
- **dass** die Brandschutzübungsvorrichtung (1) unter die Übungskarosserie (25) gefahren werden kann, wenn die Übungskarosserie (25) auf einer ebenen Fläche (31) abgestellt ist,
- vorzugsweise wobei die Übungskarosserie (25)
- aus miteinander verschweißten Metall-Rohren gefertigt ist und/oder
- die Außenform (32) eines E-Fahrzeugs simuliert.

15. **Übungs-Set** aus
- einer Brandschutzübungsvorrichtung (1) gemäß einem der Ansprüche 1 bis 13 und
- einer wiederverwendbaren, feuerfesten Löschdecke (26), **dadurch gekennzeichnet,**
- **dass** die Löschdecke (26) eine Löschgasleitung (27) aufweist, durch welche ein Löschgas (30), beispielsweise CO2, Argon oder Stickstoff, geleitet werden kann,
- vorzugsweise wobei die Löschdecke (26) hierzu einen mit der Löschgasleitung (27) verbundenen / verbindbaren Löschgasanschluss (28) aufweist.

## Claims

1. **Fire protection training device (1)** for generating at least one realistic fire scenario for training purposes, having
- a heating burner device (4) which serves as a heat source,
**characterized in that**
- the fire protection training device (1) has a plurality of heat radiating surfaces (2) which can be heated, preferably directly, by means of the heating burner device (4), so that the heat radiating surfaces (2) simulate a smoldering fire within an electrical accumulator.

2. Fire protection training device (1) according to claim 1, wherein the heating burner device (4) generates a plurality of individually controllable flames, each of which heats at least one of the heat radiating surfaces (2),
- in particular so that the heat radiating surfaces (2) can be heated to different temperatures with the aid of the heating burner device (4).

3. Fire protection training device (1) according to claim 1 or 2, wherein the heat radiating surfaces (2) are formed by blocks (3), preferably cuboidal, particularly preferably made of metal, which each simulate the shape of an accumulator block.

4. Fire protection training device (1) according to one of the preceding claims, wherein the heating burner device (4) generates respective flames which heat the heat radiating surfaces (2) from below without the flames being visible from the outside,
- in particular wherein for this purpose respective fuel outlet openings (8) of the heating burner device (4) emit flames upwards and/or are arranged within a respective space (9) which is delimited by a respective one of the blocks (3).

5. Fire protection training device (1) according to one of the preceding claims, wherein the fire protection training device (1) comprises a, preferably mechanical, adjusting means (34), in particular in the form of an adjusting screw, with which the intensity of at least one flame of the heating burner device (4) and thus the temperature of at least one of the heat radiating surfaces (2), in particular of at least one of the blocks (3), can be adjusted.

6. Fire protection training device (1) according to one of the preceding claims, wherein the fire protection training device (1) further comprises a flame burner device (5) for generating a flame front,
- preferably wherein a plurality of fuel outlet openings (8) of the flame burner device (5) are arranged between the heat radiating surfaces (2), in particular between the blocks (3),
- in particular so that flames of the flame burner device (5) can rise upwards between the heat radiating surfaces (2), in particular between the blocks (3).

7. Fire protection training device (1) according to one of the preceding claims, wherein the fire protection training device (1) comprises a pilot flame burner device (6) which is arranged to generate at least one pilot flame from a liquid fuel.

8. Fire protection training device (1) according to one of the preceding claims, wherein the fire protection training device (1) has an explosion burner device (7) which has a receptacle (13) for receiving cartridges,
- so that cartridges inserted into the receptacle (13) can be heated by means of flames from the explosion burner device (7) and can be made to explode,
- preferably wherein the receptacle (13) is in the form of a tube which has upwardly open slots through which explosive parts of cartridges inserted into the tube can be ejected and/or
- wherein the receptacle (13) can be closed by means of a mechanical safety device (36).

9. Fire protection training device (1) according to one of the preceding claims, wherein the fire protection training device (1) has a gas connection (10) for connecting a gas source,
- preferably wherein the gas connection (10) serves to supply the heating burner device (4) and/or the flame burner device (5) and/or the explosion burner device (7) with a fuel gas.

10. Fire protection training device (1) according to one of the preceding claims, wherein the fire protection training device (1) comprises a liquid fuel connection (11) for connecting a liquid fuel source,
- preferably wherein the liquid fuel connection (11) comprises an electrically heatable flow valve (12),
- in particular wherein the liquid fuel connection (11) serves to supply the pilot flame burner device (6) with a liquid fuel such as liquid propane.

11. Fire protection training device (1) according to one of the preceding claims, wherein respective fuel outlet openings (8) of the flame burner device (5) and/or the pilot flame burner device (6) and/or the explosion burner device (7) are each arranged in such a way that the respective burner device (5, 6, 7) can be ignited by means of a pilot flame (14) of the heating burner device (4),
- in particular wherein the pilot flame (14) of the heating burner device (4) can be ignited, preferably via a remote control (17), by means of an ignition device (15) integrated in the fire protection training device (1).

12. Fire protection training device (1) according to one of the preceding claims, wherein the fire protection training device (1) has a smoke generator (16), and
- wherein at least one smoke gas line is led from the smoke generator (16) to the heat radiation surfaces (2), so that smoke generated with the smoke generator (16) can rise in the immediate vicinity of the radiating surfaces (2).

13. Fire protection training device (1) according to one of the preceding claims, wherein the fire protection training device (1) comprises a remote control (17) for controlling the fire scenarios generated with the fire protection training device (1),
- preferably wherein by means of the remote control (17)
- an ignition device (15) for igniting a pilot flame (14) of the heating burner device (4) and/or
- at least one flow valve (12) for supplying the heating burner device (4) and/or the flame burner device (5) and/or the explosion burner device (7) with fuel
and/or
- a, in particular the, flow valve (12) of the liquid fuel connection (11)
and/or
- a, in particular the, smoke generator (16) and/or
- at least one adjusting means for regulating the intensity of a flame of the heating burner device (4)
can be controlled remotely.

14. **Exercise set**, consisting of
- a fire protection training device (1) according to one of the preceding claims and
- a reusable, fireproof training body (25),
**characterized in that**
- the fire protection training device (1) can be moved under the training body (25) when the training body (25) is parked on a flat surface (31),
- preferably wherein the training body (25)
- is made of metal tubes welded together and/or
- simulates the external shape (32) of an electric vehicle.

15. **Exercise set,** consisting of
- a fire protection training device (1) according to one of claims 1 to 13
and
- a reusable, fireproof extinguishing blanket (26),
**characterized in that**
- the extinguishing blanket (26) has an extinguishing gas line (27) through which an extinguishing gas (30), for example CO2, argon or nitrogen, can be fed,
- preferably wherein the extinguishing blanket (26) has an extinguishing gas connection (28) connected/connectable to the extinguishing gas line (27) for this purpose.

## Revendications

1. Dispositif pour exercices de lutte contre l'incendie (1) destiné à créer au moins un scénario d'incendie réaliste à des fins d'exercice, avec un dispositif de brûleur de chauffage (4) servant de source de chaleur, **caractérisé en ce que** le dispositif pour exercices de lutte contre l'incendie (1) comporte plusieurs surfaces rayonnant de la chaleur (2) qui peuvent être chauffées au moyen du dispositif de brûleur de chauffage (4), de préférence directement, de sorte que les surfaces rayonnant de la chaleur (2) simulent un feu couvant à l'intérieur d'un accumulateur électrique.

2. Dispositif pour exercices de lutte contre l'incendie (1) selon la revendication 1, dans lequel le dispositif de brûleur de chauffage (4) produit plusieurs flammes réglables séparément qui chauffent chacune une des surfaces rayonnant de la chaleur (2), en particulier de telle manière que les surfaces rayonnant de la chaleur (2) puissent être chauffées à l'aide du dispositif de brûleur de chauffage (4) à différentes températures.

3. Dispositif pour exercices de lutte contre l'incendie (1) selon la revendication 1 ou 2, dans lequel les surfaces rayonnant de la chaleur (2) sont formées par des blocs (3), de préférence parallélépipédiques, en particulier en métal, qui simulent chacun la forme d'un bloc d'accumulateur.

4. Dispositif pour exercices de lutte contre l'incendie (1) selon l'une des revendications précédentes, dans lequel le dispositif de brûleur de chauffage (4) produit des flammes qui chauffent les surfaces rayonnant de la chaleur (2) par dessous sans être visibles de l'extérieur, en particulier dans lequel des ouvertures de sortie de combustible (8) du dispositif de brûleur de chauffage (4) projettent vers le haut et/ou sont disposées à l'intérieur d'un espace (9) correspondant qui est délimité par un bloc (3) correspondant.

5. Dispositif pour exercices de lutte contre l'incendie (1) selon l'une des revendications précédentes, lequel dispositif pour exercices de lutte contre l'incendie (1) comporte un moyen de réglage (34), en particulier mécanique, en particulier formé par une vis de réglage, qui permet de régler l'intensité d'au moins une flamme du dispositif de brûleur de chauffage (4) et ainsi la température d'au moins une des surfaces rayonnant de la chaleur (2), en particulier d'au moins un des blocs (3).

6. Dispositif pour exercices de lutte contre l'incendie (1) selon l'une des revendications précédentes, lequel dispositif pour exercices de lutte contre l'incendie (1) comporte en outre un dispositif de brûleur à flammes (5) pour la production d'un front de flammes,
- dans lequel plusieurs ouvertures de sortie de combustible (8) du dispositif de brûleur à flammes (5) sont de préférence disposées entre les surfaces rayonnant de la chaleur (2), en particulier entre les blocs (3),
- en particulier de telle manière que les flammes du dispositif de brûleur à flammes (5) puissent monter vers le haut entre les surfaces rayonnant de la chaleur (2), en particulier entre les blocs (3).

7. Dispositif pour exercices de lutte contre l'incendie (1) selon l'une des revendications précédentes, lequel dispositif pour exercices de lutte contre l'incendie (1) comporte un dispositif de brûleur à dard de flamme (6) conformé pour produire au moins un dard de flamme à partir d'un combustible liquide.

8. Dispositif pour exercices de lutte contre l'incendie (1) selon l'une des revendications précédentes, lequel dispositif pour exercices de lutte contre l'incendie (1) comporte un dispositif de brûleur à explosion (7) qui comporte un logement (13) destiné à recevoir des cartouches,
- de telle façon que les cartouches introduites dans le logement (13) puissent être chauffées au moyen de flammes du dispositif de brûleur à explosion (7) pour les faire exploser,
- le logement (13) étant de préférence conformé comme un tube qui présente des fentes ouvertes vers le haut, à travers lesquelles des fragments explosés de cartouches introduites dans le tube peuvent être éjectés et/ou
- le logement (13) pouvant être fermé au moyen d'une sûreté mécanique (36).

9. Dispositif pour exercices de lutte contre l'incendie (1) selon l'une des revendications précédentes, lequel dispositif pour exercices de lutte contre l'incendie (1) comporte un raccord de gaz (10) pour le raccordement à une source de gaz, lequel raccord de gaz (10) sert à alimenter le dispositif de brûleur de chauffage (4) et/ou le dispositif de brûleur à flammes (5) et/ou le dispositif de brûleur à explosion (7) en gaz combustible.

10. Dispositif pour exercices de lutte contre l'incendie (1) selon l'une des revendications précédentes, lequel dispositif pour exercices de lutte contre l'incendie (1) comporte un raccord de combustible liquide (11) pour le raccordement à une source de combustible liquide,
- le raccord de combustible liquide (11) comportant de préférence une vanne à débit continu (12) pouvant être chauffée,
- le raccord de combustible liquide (11) servant en particulier à l'alimentation du dispositif de brûleur à dard de flamme (6) en combustible liquide, par exemple en propane liquéfié.

11. Dispositif pour exercices de lutte contre l'incendie (1) selon l'une des revendications précédentes, dans lequel les ouvertures de sortie de combustible (8) du dispositif de brûleur à flammes (5) et/ou du dispositif de brûleur à dard de flamme (6) et/ou du dispositif de brûleur à explosion (7) sont disposées de telle façon que le dispositif de brûleur (5, 6, 7) correspondant peut être allumé au moyen d'une veilleuse d'allumage (14) du dispositif de brûleur de chauffage (4), laquelle veilleuse d'allumage (14) du dispositif de brûleur de chauffage (4) peut de préférence être allumée par une télécommande (17), au moyen d'un dispositif d'allumage (15) intégré dans le dispositif pour exercices de lutte contre l'incendie (1).

12. Dispositif pour exercices de lutte contre l'incendie (1) selon l'une des revendications précédentes, dans lequel le dispositif pour exercices de lutte contre l'incendie (1) comporte un générateur de fumée (16) et dans lequel au moins une conduite de gaz de fumée est disposée du générateur de fumée (16) aux surfaces rayonnant de la chaleur (2), de sorte que la fumée produite avec le générateur de fumée (16) peut s'élever au voisinage immédiat des surfaces rayonnantes (2).

13. Dispositif pour exercices de lutte contre l'incendie (1) selon l'une des revendications précédentes, lequel dispositif pour exercices de lutte contre l'incendie (1) comprend une télécommande (17) pour la commande des scénarios d'incendie produits avec le dispositif pour exercices de lutte contre l'incendie (1),
- au moins un dispositif d'allumage (15) pour allumer une veilleuse d'allumage (14) du dispositif de brûleur de chauffage (4) et/ou
- au moins une vanne à débit continu (12) pour l'alimentation du dispositif de brûleur de chauffage (4) et/ou du dispositif de brûleur à flammes (5) et/ou du dispositif de brûleur à explosion (7) en carburant et/ou
- une, en particulier la, vanne à débit continu (12) du raccord de combustible liquide (11) et/ou
- un, en particulier le, générateur de fumée (16) et/ou
- au moins un moyen de réglage pour la régulation de l'intensité d'une flamme du dispositif de brûleur de chauffage (4)
pouvant être commandés à distance au moyen de la télécommande (17).

14. Équipement d'exercice comprenant
- un dispositif pour exercices de lutte contre l'incendie (1) selon l'une des revendications précédentes et
- une carrosserie d'exercice (25) ignifuge et réutilisable,
**caractérisé en ce que**
- le dispositif pour exercices de lutte contre l'incendie (1) peut être amené sous la carrosserie d'exercice (25) quand la carrosserie d'exercice (25) est stationnée sur une surface plane (31),
- la carrosserie d'exercice (25) étant de préférence fabriquée à partir de tubes métalliques soudés les uns aux autres et/ou
- simulant la forme extérieure (32) d'un véhicule électrique.

15. Équipement d'exercice comprenant
- un dispositif pour exercices de lutte contre l'incendie (1) selon l'une des revendications 1 à 13 et
- une couverture antifeu (26) ignifuge et réutilisable,
**caractérisé en ce que**
- la couverture antifeu (26) comprend une conduite de gaz d'extinction (27) à travers laquelle un gaz d'extinction (30), de préférence du CO₂, de l'argon ou de l'azote, peut être acheminé,
- la couverture antifeu (26) comportant pour cela un raccord de gaz d'extinction (28) relié/pouvant être relié à la conduite de gaz d'extinction (27).
